# EUROPEAN PATENT SPECIFICATION

(11) **EP 2 784 690 B1**
(45) Date of publication and mention of the grant of the patent: **17.07.2019**
(21) Application number: 14161418.0
(22) Date of filing: 25.03.2014
(51) Int. Cl.: G06F 13/40, H04W 4/00

(54) **Method and electronic device for identifying accessory**
Verfahren und elektronische Vorrichtung Identifizierung von Zubehör
Procédé et dispositif électronique pour l'identification d'accessoire

(30) Priority: 26.03.2013 KR 20130032226
(43) Date of publication of application: 01.10.2014
(73) Proprietor: Samsung Electronics Co., Ltd., Suwon-si Gyeonggi-do 443-742 (KR)
(72) Inventor: Heo, Chang Ryong, Gyeonggi-do (KR); Park, Ken-Hyung, Gyeonggi-do (KR)
(74) Representative: Nederlandsch Octrooibureau

(56) References cited:
- US-A1- 2003 220 988
- US-A1- 2011 093 643
- US-A1- 2011 098 085

## Description

### TECHNICAL FIELD

The present disclosure relates generally to an electronic device, and more particularly, to a method of identifying an accessory in an electronic device, and to a related device.

### BACKGROUND

Recently, the electronic device provides various functions as its technology develops. For example, the electronic device provides multimedia and scheduling functions such as alarm, short messaging service (SMS), multimedia message service (MMS), email, game, communication, image management, and audio and video content providing functions.

As described above, as the functions of the electrical device are diversified, it is a trend that the price of the electronic device is gradually increasing. Thus, consumers who purchase the electronic device purchases and uses various accessories to decorate the appearance of the electronic device and express their personalities. For example, a user may purchase a protective case, an ear cap and an electronic pen of the electronic device to protect the appearance of the electronic device, to enhance the convenience of use, and to express his/her personality. In particular, it is a trend that cases where users have various types of accessories and use different accessories depending on the situation are increasing.

### SUMMARY

In using electronic devices, users can search and download themes coordinating with accessories coupled to the electronic device to control a software program, in addition to coupling the above-described accessories to the electronic device. For example, if the electronic device is covered with a red protective case, the user of the electronic device may search and download a red theme coordinating with the protective case and decorate software program for UI/UX(User Interface/User experience) . As another example, if a flower-shaped ear cap is coupled to the electronic device, the user of the electronic device may search and download a flower theme coordinating with the flower-shaped ear cap and decorate software program for UI/UX.

However, the above-described method can be cumbersome in that users need to search themes suitable for accessories, download and install the searched themes each time users purchase accessories. Thus, there is a need for a method capable of simplifying the above-described procedures.

To address the above-discussed deficiencies, the present disclosure can provide a method and device for identifying accessories attached to, coupled to, or in wired or wireless communication with an electronic device.

The present disclosure can provide a method and device for checking whether accessories are attached to, coupled to, or in wired or wireless communication with an electronic device.

Another aspect of the present disclosure is to provide a method and device for downloading and installing corresponding software program(s) or functionality(ies) (such as software for UI/UX) according to electronic connection mechanisms (for example, by way of an analog to digital conversion (ADC) value of an accessory) attached to, coupled to, or in wired or wireless communication with an electronic device. In this document, the term "software program" can generally refer to any kind of software program, including, but not limited to, a portion or all of one or more of an application software program, a firmware, a framework, an application programming interface, a middleware, or an operating system.

Another aspect of the present disclosure is to provide a method and device for downloading and installing corresponding software program according to tag information on an accessory attached to, coupled to, or in wired or wireless communication with an electronic device.

Another aspect of the present disclosure is to provide a method and device for determining one or more of types, attributes, properties, or characteristics of an accessory according to an ADC value of an accessory attached to, coupled to, or in wired or wireless communication with an electronic device.

Another aspect of the present disclosure is to provide a method and device for determining one or more of types, attributes, properties, or characteristics of an accessory according to tag information on or associated with an accessory attached to, coupled to, or in wired or wireless communication with an electronic device.

According to an aspect of the present disclosure, a method of controlling an electronic device includes identifying, by an electronic device, an identification(ID) of an accessory that is coupled to the electronic device; receiving, by the electronic device, at least one software program, based on the identified ID of the accessory; and installing, by the electronic device, the received software program.

According to another aspect of the present disclosure, an electronic device includes one or more processors; a touch sensitive display; a communication system; an external device interface; and a memory configured to store one or more programs wherein the one or more processors are configured to execute instructions of the one or more programs to identifying an identification(ID) of an accessory that is coupled to the electronic device; receiving at least one software program, based on the identified ID of the accessory; and installing the received software program.

In this document, without limitation, the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases. US2011/0098085A1 relates to a mobile communications device accessory identification system, an improved accessory for use with a mobile communications device, and a method of identifying the same. US2003/0220988A1 relates to communication systems, and more particularly, to a method and an electronic device for establishing an interface to control an accessory device.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1A illustrates a block diagram of an electronic device capable of identifying an accessory according to an embodiment of the present disclosure;
FIG. 1B illustrates a block diagram of a processor capable of identifying an accessory according to an embodiment of the present disclosure;
FIG. 2A illustrates a flowchart of a procedure of automatically installing software program when coupling an accessory in an electronic device according to an embodiment of the present disclosure;
FIG. 2B illustrates a diagram of units capable of automatically installing software program when coupling an accessory in an electronic device according to an embodiment of the present disclosure;
FIG. 3 illustrates a flowchart of a procedure of downloading and installing software program according to an ADC value of an accessory in an electronic device according to an embodiment of the present disclosure;
FIG. 4 illustrates a flowchart of a procedure of downloading and installing software program according to tag information on an accessory in an electronic device according to another embodiment of the present disclosure;
FIG. 5 illustrates a flowchart of a procedure of downloading and installing software program according to an ADC value and tag information on an accessory in an electronic device according to another embodiment of the present disclosure;
FIGS. 6A and 6B illustrate examples of protective cases for an electronic device according to embodiments of the present disclosure;
FIGS. 7A and 7B illustrate examples of electronic pens according to embodiments of the present disclosure;
FIGS. 8A and 8B illustrate examples of ear caps for an electronic device according to an embodiment of the present disclosure;
FIGS. 9A and 9B illustrate examples where a different software program is installed according to an accessory in an electronic device according to an embodiment of the present disclosure;
FIG. 10 illustrates an example where an software program is installed according to a coupled ear cap in an electronic device according to an embodiment of the present disclosure; and
FIG. 11 illustrates an example where an software program is installed according to a coupled electronic pen in an electronic device according to an embodiment of the present disclosure.

### DETAILED DESCRIPTION

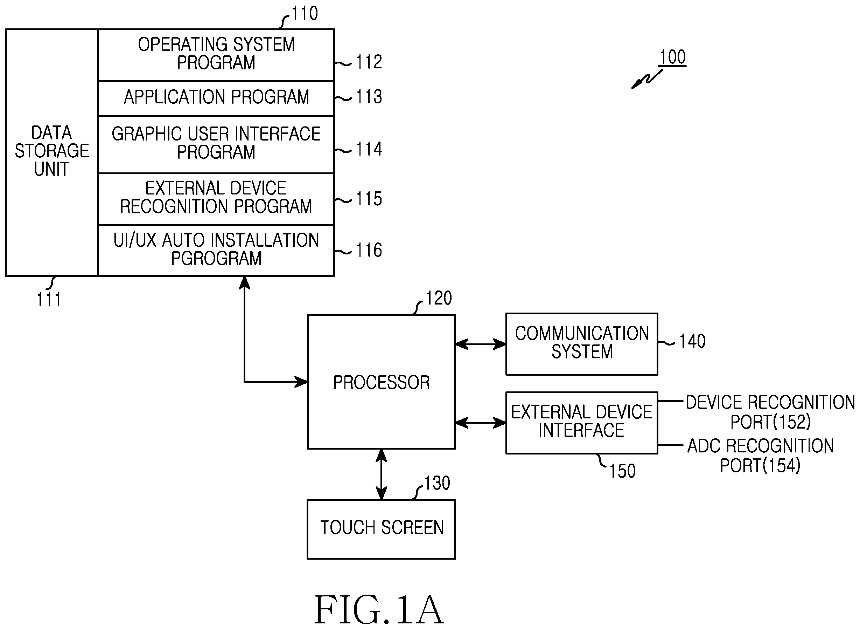

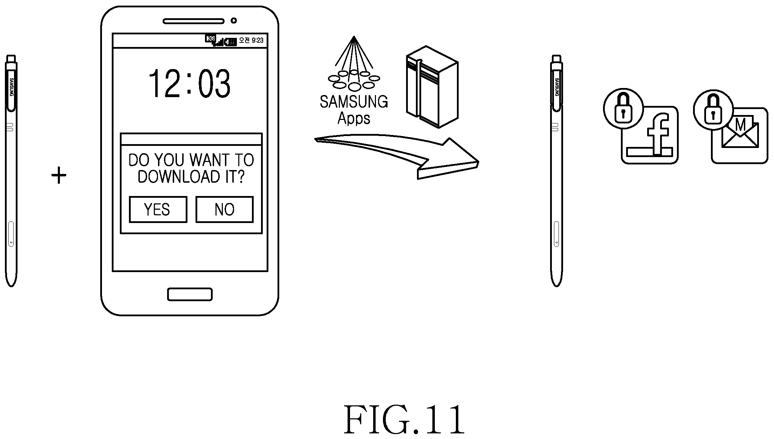

FIGURES 1A through 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. Exemplary embodiments of the present disclosure will be described below in more detail with reference to the accompanying drawings. Moreover, detailed descriptions related to well-known functions or configurations will be ruled out in order not to unnecessarily obscure subject matters of the present disclosure. The terms described below are those defined by considering the functions in embodiments of the present disclosure and may vary depending on the intention or of a user or an operator or practice. Therefore, the definitions will be made on the basis of the contents throughout the specification.

In the following description, an electronic device includes a mobile communication terminal supporting at least one communication system, a smart phone, a tablet personal computer (PC), a digital camera, an MP3 player, a navigation device, a laptop, a net book, a desktop computer, a TV, a refrigerator, and an air conditioner.

In this document, the term "software program" can generally refer to any kind of software program, including, but not limited to, a portion or all of one or more of an application software program, a firmware, a framework, an application programming interface, a middleware, or an operating system.

FIG. 1A illustrates a block diagram of an electronic device capable of identifying an accessory according to an embodiment of the present disclosure.

Referring to FIG. 1A, an electronic device 100 includes a memory 110, a processor 120, a touch screen 130, a communication system 140, and an external device interface 150. Each of the memory 110 and processor 120 may include a plurality of memories 110 and a plurality of processors 120.

The memory 110 includes a data storage unit 111, an operating system (OS) program 112, an application program 113, a graphic user interface (GUI) program 114, an external device recognition program 115, and an software program auto installation program 116. Moreover, since a program that is a software component may be referred to as a set of instructions, the program is also represented as an instruction set. The program is also referred to as a module.

The memory 110 may store one or more programs that include instructions performing embodiments of the present disclosure.

The data storage unit 111 stores data generated while performing functions corresponding to the programs stored in the memory 110. The data storage unit 111 according to the present disclosure may store analog to digital converter (ADC) values and tag information corresponding to software program downloaded from a server. For example, if the electronic device 100 downloads software program from the server by using ranges of ADC values and tag information on accessories attached to the electronic device 100, the data storage unit 111 may store ranges of ADC values and tag information on corresponding accessories. In particular, if there is software program corresponding to a range of ADC values of an ear cap attached to the electronic device in a server and thus the electronic device downloads corresponding software program from the server, the data storage unit 111 may store the range of ADC values of the ear cap. As another example, if there is software program corresponding to tag information checked from a protective case for the electronic device 100 in a server and thus the electronic device 100 downloads corresponding software program from the server, the data storage unit 111 may store the tag information on the protective case.

In addition, the data storage unit 111 may store and install software program that is downloaded from a server by using ADC values and tag information on accessories that attached to the electronic device. For example, it is possible to store and install software program downloaded from a server by using Bluetooth tag information that is checked from an electronic pen attached to the electronic device 100.

The OS program 112 (for example, internal OS such as WINDOWS, LINUX, Darwin, RTXC, UNIX, OS X, or VxWorks) includes several software components that control general system operations. For example, the control of the general system operations means memory management and control, storage hardware (device) control and management, and power control and management. The OS program 112 performs a function of making communication between a lot of hardware (devices) and software components (programs) smooth.

The application program 113 includes browser, email, message, word processing, address book, widget, Digital Right Management (DRM), voice recognition, voice copy and position determining functions, a location based service, and a phone application.

The GUI program 114 includes at least one software component that provides a GUI between a user and the electronic device 100. That is, the GUI program 114 includes at least one software component for displaying user interface information on the touch screen 130. According to the present disclosure, the GUI program 114 includes instructions to provide options and thus if a range of ADC values and tag information checked from an accessory are different from those stored in the data storage unit 111, the GUI program 114 provides options to download and automatically install software program corresponding to corresponding range of ADC values and tag information from a server. In this case, the options may be displayed in the form of a message such as a popup message.

In addition, the GUI program 114 includes an instruction to display installed software program if the software program downloaded from the server is installed. For example, if a Samsung Electronics wallpaper image is downloaded from the server, the GUI program 114 may display the Samsung Electronics wallpaper image.

The external device recognition program 115 may recognize that an accessory may be coupled to a device recognition port 152 of the external device interface 150. In other words, the external device recognition program 115 may recognize that a recognition pin attached to the accessory is coupled to the device recognition port 152 and thus check that the device recognition port 152 is coupled to the accessory. In this case, the external device recognition program 115 may sense that a switch (not shown) in the device recognition port 152 is pressed and thus recognize that the device recognition port 152 is coupled to the recognition pin. Moreover, the device recognition port 152 of the external device interface 150 may include a plurality of ports that are physically divided in order to identify the type of an accessory. If the device recognition port 152 includes a plurality of ports, the external device recognition program 115 may identify the type of a coupled accessory by sensing to which port among the plurality of ports a recognition pin is coupled. For example, it is recognized that the recognition pin is coupled to a device recognition port set for the purpose of recognizing a protective case, the external device recognition program 115 may check that the electronic device 100 is covered with the protective case. As another example, if it is recognized that the recognition pin is coupled through a device recognition port set for the purpose of recognizing an ear cap, the external device recognition program 115 may check that the car cap is coupled to the electronic device 100. As another example, if it is recognized that the recognition pin is coupled through a recognition port set for the purpose of recognizing an electronic pen, the external device recognition program 115 may check that the electronic pen is coupled to the electronic device 100.

In addition, in one embodiment, the external device recognition program 115 may check a range of ADC values associated with a coupled accessory, as described below. For example, the accessory can have an internal resistor that is electrically coupled to the external electronic device through a connection mechanism (for example, an ADC recognition port 154). The external device can flow an electric current to the internal resistor through the connection mechanism. The external device can have an ADC that detects a resulting electric current or voltage, and provides the value(s) thereof to the external device recognition program 115. The external device recognition program 115 checks a range of the value(s) from the ADC (hereinafter, referred to as "ADC value").

For example, a covered protective case can have an internal resistor, as described above. The external device recognition program 115 may check on the basis of a level of a voltage flowing in the resistor of a corresponding ADC that a range of ADC values is 10 to 20. As another example, if there is an ADC in a coupled ear cap, the external device recognition program 115 may check on the basis of a level of a voltage flowing in a resistor of a corresponding ADC that a range of ADC values is 30 to 40. As another example, if there is an ADC in a coupled electronic pen, the external device recognition program 115 may check on the basis of a level of a voltage flowing in a resistor of a corresponding ADC that a range of ADC values is 50 to 60.

Moreover, the external device recognition program 115 checks whether the checked range of ADC values is the same as a pre-stored range of ADC values. In other words, the external device recognition program 115 may check whether there is a history that software program corresponding to the currently coupled accessory has been downloaded to the electronic device 100, by checking whether the checked range of ADC values is the same as a pre-stored range of ADC values.

In addition, the external device recognition program 115 may check tag information on a coupled accessory. In other words, if there is a physical, optical, or electrical tag (for example, QR code, bar code, NFC tag, BLE tag, or RFID) in a coupled accessory, the external device recognition program 115 checks tag information from a corresponding tag through the communication system 140. For example, if there is an NFC tag in a covered protective case, the external device recognition program 115 may obtain ID information from a corresponding NFC tag through the communication system 140. As another example, if there is a Bluetooth tag in a coupled ear cap, the external device recognition program 115 may obtain ID information from a corresponding Bluetooth tag through the communication system 140. As another example, if there is a Bluetooth tag in a coupled electronic pen, the external device recognition program 115 may obtain ID information from a corresponding Bluetooth tag through the communication system 140. Here, the external device recognition program 115 may also obtain tag information on an accessory that is not coupled to the electronic device 100. For example, the external device recognition program 115 may obtain ID information from a tag of an accessory that is placed within a critical distance from the electronic device 100, through an NFC reader (not shown).

Moreover, the external device recognition program 115 checks whether the checked tag information is the same as a pre-stored range of ADC values. In other words, the external device recognition program 115 may check whether there is a history that software program corresponding to a currently coupled accessory has been downloaded, by checking whether the checked tag information is the same as pre-stored tag information.

In addition, the external device recognition program 115 may determine the type of an accessory according to a range of ADC values of the accessory. For example, if the accessory has a range of ADC values of 10 to 20, the external device recognition program 115 may determine a corresponding accessory as a protective case. As another example, if the accessory has a range of ADC values of 30 to 40, the external device recognition program 115 may determine a corresponding accessory as an ear cap. As another example, if the accessory has a range of ADC values of 50 to 60, the external device recognition program 115 may determine a corresponding accessory as an electronic pen. In these cases, in order to determine the type of the accessory, information on a range of ADC values according to an accessory will be preset in the electronic device 100.

The software program auto installation program 116 downloads and installs software program corresponding to a range of ADC values of an accessory from a server. In particular, when the checked range of ADC values of an accessory is not pre-stored in the data storage unit 111, the software program auto installation program 116 checks whether there is software program corresponding to the checked range of ADC values in the server, downloads and automatically installs corresponding software program from the server if there is software program corresponding to the checked range of ADC values in the server. For example, if a range of ADC values of a protective case that is 10 to 20 is not stored in the data storage unit 111, the software program auto installation program 116 checks whether there is software program corresponding to the range of ADC values, 10 to 20, in a server, downloads and automatically installs corresponding software program. As another example, if a range of ADC values of an ear cap that is 30 to 40 is not stored in the data storage unit 111, the software program auto installation program 116 checks whether there is software program corresponding to the range of ADC values, 30 to 40, in the server, downloads and automatically installs corresponding software program. As another example, if a range of ADC values of an electronic pen that is 50 to 60 is not stored in the data storage unit 111, the software program auto installation program 116 checks whether there is software program corresponding to the range of ADC values, 50 to 60, in the server, downloads and automatically installs corresponding software program.

In addition, the software program auto installation program 116 downloads and installs software program corresponding to tag information on an accessory from a server. In particular, when ID information checked from a tag of an accessory is not pre-stored, the software program auto installation program 116 checks whether there is software program corresponding to the checked ID information in a server, downloads corresponding software program from the server and automatically installs software program in the electronic device 100 if there is software program corresponding to the checked ID information in the server. For example, when the ID information checked from an NFC tag of a protective case is not stored, the software program auto installation program 116 checks whether there is software program corresponding to the checked ID information in a server, downloads and automatically installs corresponding software program. As another example, when the ID information checked from an Bluetooth tag of an ear cap is not stored, the software program auto installation program 116 checks whether there is software program corresponding to the checked ID information in a server, downloads and automatically installs corresponding software program. As another example, when the ID information checked from an Bluetooth tag of an electronic pen is not stored, the software program auto installation program 116 checks whether there is software program corresponding to the checked ID information in a server, downloads and automatically installs corresponding software program.

The processor 120 may include at least one processor and a peripheral interface though not shown. Moreover, the processor 120 executes a specific program (instruction set) stored in the memory 110 to perform a plurality of specific functions corresponding to the program.

The touch screen 130 is a tough-sensitive display and provides an interface for a touch input/output between the electronic device 100 and a user. The touch screen 130 is a medium that senses a touch (or contact) through a touch sensor (not shown), delivers the sensed touch input to the electronic device 100, and visually provides an output from the electronic device 100 to a user. That is, the touch screen 130 provides a text, graphic, and video based visual output to the user in response to the touch input.

The touch screen 130 includes a touch sensing surface that senses a user's touch input and thus the touch screen 130 senses a user's touch input by haptic contact, tactile contact or a combination thereof. For example, the touch sensing point of the touch screen 130 corresponds to the digit of a finger that is used for contact with the touch sensing surface. Moreover, the touch screen 130 senses contact by an external devices such as a stylus, a pen, etc. through the touch sensing surface. The sensed contact changes to interaction corresponding to a user interface target (for example, a soft key) displayed on the touch screen.

The touch screen 130 may use various display technologies such as a liquid crystal display (LCD), a light emitting diode (LED), a light emitting polymer display (LPD), an organic light emitting diode (OLED), an active matrix organic light emitting diode (AMOLED) or a flexible LED (FLED). The touch screen 130 of the present disclosure is not limited to a touch screen that uses such display technologies. Moreover, the touch screen 130 may sense the start, movement, stop or end of contact with the touch sensing surface by using various touch detection (or sensing) technologies such as capacitive detection, resistive detection, infrared detection or surface acoustic wave detection technologies. The touch screen 130 according to the present disclosure may display software program that is downloaded from a server and automatically installed. For example, the touch screen 130 may display the Samsung electronics theme that is downloaded from the server and automatically installed. In addition, if there is a history that the currently combined accessory has been coupled, the touch screen 130 may display a message that represents corresponding information.

The communication system 140 may include a radio frequency receiver and transceiver and/or an optical (for example, infrared) receiver and transceiver. For example, the communication system 140 may include a communication system that supports any one of Global System for Mobile Communication (GSM), Enhanced Data GSM Environment (EDGE), Code Division Multiple Access (CDMA), W-Code Division Multiple Access (W-CDMA), Long Term Evolution (LTE), Orthogonal Frequency Division Multiple Access (OFDMA), Wireless Fidelity (Wi-Fi), Near Field Communication (NFC), IrDA, WiMax and/or Bluetooth networks. The communication system according to an embodiment of the present disclosure is not limited to the communication system that supports the above-described networks, but may be any communication system that supports other networks. If a range of ADC values and tag information on a coupled accessory are not stored in a memory, the communication system 140 according to the present disclosure may perform a communication connection to a server. In addition, the communication system 140 may download software program corresponding to a range of ADC values and tag information from the connected server.

The external device interface 150 includes the device recognition port 152 and the ADC recognition port 154. The device recognition port 152 and the ADC recognition port 154 may be provided for each of all types of accessories.

The device recognition port 152 may be coupled to a recognition pin that is included in an accessory. The device recognition port 152 may includes a plurality of ports that are physically divided, and a plurality of device recognition ports may be coupled to recognition pins of different accessories. For example, a first device recognition port may be coupled to a recognition pin that is included in a protective case. As another example, a second device recognition port may be coupled to a recognition pin that is included in an ear cap. As another example, a third device recognition port may be coupled to a recognition pin that is included in an electronic pen.

The ADC recognition port 154 may be coupled to an ADC that is included in an accessory. The ADC recognition port 154 may include a plurality of ports that are physically divided. The plurality of ADC recognition ports may measure and recognize ADC values of different accessories. For example, a first ADC recognition port may measure and recognize an ADC value of a protective case. As another example, a second ADC recognition port may measure and recognize an ADC value of an ear cap. As another example, a third ADC recognition port may measure and recognize of an electronic pen.

In the foregoing embodiments of the present disclosure, recognizing the coupling and/or type of an accessory through sensing a recognition pin using a device recognition port, measuring an ADC value using an ADC recognition port and obtaining ID using a tag (NFC and Bluetooth) reader are described as examples. However, it would be possible to recognize the coupling and/or type of an accessory by using other sensors (e.g., a hall sensor, an IR sensor, etc.) that are included in the electronic device 100.

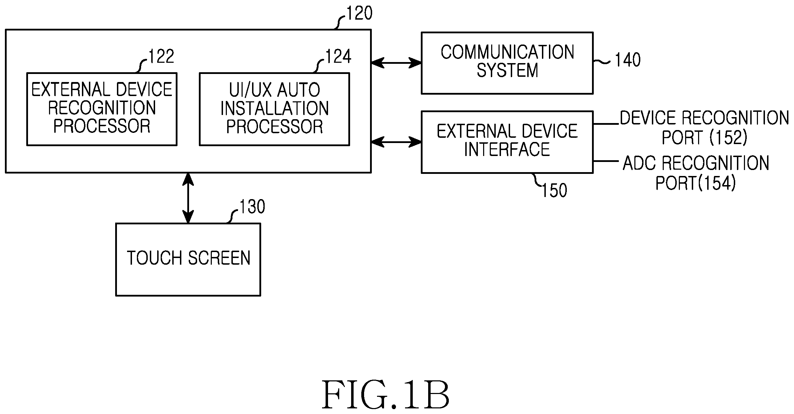

FIG. 1B illustrates a block diagram of a processor capable of identifying an accessory according to an embodiment of the present disclosure.

Referring to FIG. 1B, the processor 120 includes an external device recognition processor 122 and an software program auto installation processor 124.

The external device recognition processor 122 may recognize that an accessory is coupled to the device recognition port 152 of the external device interface 150. In other words, the external device recognition processor 122 may recognize that a recognition pin attached to an accessory is coupled to the device recognition port 152 and thus check that the accessory is coupled to the device recognition port 152. In this case, the external device recognition processor 122 may sense that a switch (not shown) in the device recognition port 152 is pressed and thus recognize that the device recognition port 152 is coupled to the recognition pin. Moreover, the device recognition port 152 of the external device interface 150 may include a plurality of ports that are physically divided in order to identify the type of an accessory. If the device recognition port 152 includes a plurality of ports, the external device recognition processor 122 may identify the type of a coupled accessory by sensing to which port among the plurality of ports a recognition pin is coupled. For example, it is recognized that the recognition pin is coupled to a device recognition port set for the purpose of recognizing a protective case, the external device recognition processor 122 may check that the electronic device 100 is covered with the protective case. As another example, if it is recognized that the recognition pin is coupled through a device recognition port set for the purpose of recognizing an ear cap, the external device recognition processor 122 may check that the car cap is coupled to the electronic device 100. As another example, if it is recognized that the recognition pin is coupled through a recognition port set for the purpose of recognizing an electronic pen, the external device recognition processor 122 may check that the electronic pen is coupled to the electronic device 100.

In addition, the external device recognition processor 122 may check a range of ADC values of a coupled accessory. In other words, if there is an ADC in the coupled accessory, the external device recognition processor 122 checks a range of ADC values by recognizing a level of a voltage that flows in a resistor of a corresponding ADC through an ADC recognition port 154. For example, if there is an ADC in a covered protective case, the external device recognition processor 122 may check on the basis of a level of a voltage flowing in a resistor of a corresponding ADC that a range of ADC values is 10 to 20. As another example, if there is an ADC in a coupled ear cap, the external device recognition processor 122 may check on the basis of a level of a voltage flowing in a resistor of a corresponding ADC that a range of ADC values is 30 to 40. As another example, if there is an ADC in a coupled electronic pen, the external device recognition processor 122 may check on the basis of a level of a voltage flowing in a resistor of a corresponding ADC that a range of ADC values is 50 to 60.

Moreover, the external device recognition processor 122 checks whether the checked range of ADC values is the same as a pre-stored range of ADC values. In other words, the external device recognition processor 122 may check whether there is a history that software program corresponding to the currently coupled accessory has been downloaded to the electronic device 100, by checking whether the checked range of ADC values is the same as a pre-stored range of ADC values.

In addition, the external device recognition processor 122 may check tag information on a coupled accessory. In other words, if there is tag information in a coupled accessory, the external device recognition processor 122 checks tag information from a corresponding tag through the communication system 140. For example, if there is an NFC tag in a covered protective case, the external device recognition processor 122 may obtain ID information from a corresponding NFC tag through the communication system 140. As another example, if there is a Bluetooth tag in a coupled ear cap, the external device recognition processor 122 may obtain ID information from a corresponding Bluetooth tag through the communication system 140. As another example, if there is a Bluetooth tag in a coupled electronic pen, the external device recognition processor 122 may obtain ID information from a corresponding Bluetooth tag through the communication system 140. Here, the external device recognition processor 122 may also obtain tag information on an accessory that is not coupled to the electronic device 100. For example, the external device recognition processor 122 may obtain ID information from a tag of an accessory that is placed within a critical distance from the electronic device 100, through an NFC reader (not shown).

Moreover, the external device recognition processor 122 checks whether the checked tag information is the same as a pre-stored range of ADC values. In other words, the external device recognition processor 122 may check whether there is a history that software program corresponding to a currently coupled accessory has been downloaded, by checking whether the checked tag information is the same as pre-stored tag information.

In addition, the external device recognition processor 122 may determine the type of an accessory according to a range of ADC values of the accessory. For example, if the accessory has a range of ADC values of 10 to 20, the external device recognition processor 122 may determine a corresponding accessory as a protective case. As another example, if the accessory has a range of ADC values of 30 to 40, the external device recognition processor 122 may determine a corresponding accessory as an ear cap. As another example, if the accessory has a range of ADC values of 50 to 60, the external device recognition processor 122 may determine a corresponding accessory as an electronic pen. In these cases, in order to determine the type of the accessory, information on a range of ADC values according to an accessory will be preset in the electronic device 100.

The software program auto installation processor 124 downloads and installs software program corresponding to a range of ADC values of an accessory from a server. In particular, when the checked range of ADC values of an accessory is not pre-stored in the data storage unit 111, the software program auto installation processor 124 checks whether there is software program corresponding to the checked range of ADC values in the server, downloads and automatically installs corresponding software program from the server if there is software program corresponding to the checked range of ADC values in the server. For example, if a range of ADC values of a protective case that is 10 to 20 is not stored in the data storage unit 111, the software program auto installation processor 124 checks whether there is software program corresponding to the range of ADC values, 10 to 20, in a server, downloads and automatically installs corresponding software program. As another example, if a range of ADC values of an ear cap that is 30 to 40 is not stored in the data storage unit 111, the software program auto installation processor 124 checks whether there is software program corresponding to the range of ADC values, 30 to 40, in the server, downloads and automatically installs corresponding software program. As another example, if a range of ADC values of an electronic pen that is 50 to 60 is not stored in the data storage unit 111, the software program auto installation processor 124 checks whether there is software program corresponding to the range of ADC values, 50 to 60, in the server, downloads and automatically installs corresponding software program.

In addition, the software program auto installation processor 124 downloads and installs software program corresponding to tag information on an accessory from a server. In particular, when ID information checked from a tag of an accessory is not pre-stored, the software program auto installation processor 124 checks whether there is software program corresponding to the checked ID information in a server, downloads corresponding software program from the server and automatically installs the software program in the electronic device 100 if there is software program corresponding to the checked ID information in the server. For example, when the ID information checked from an NFC tag of a protective case is not stored, the software program auto installation processor 124 checks whether there is software program corresponding to the checked ID information in a server, downloads and automatically installs corresponding software program. As another example, when the ID information checked from an Bluetooth tag of an ear cap is not stored, the software program auto installation processor 124 checks whether there is software program corresponding to the checked ID information in a server, downloads and automatically installs corresponding software program. As another example, when the ID information checked from an Bluetooth tag of an electronic pen is not stored, the software program auto installation processor 124 checks whether there is software program corresponding to the checked ID information in a server, downloads and automatically installs corresponding software program.

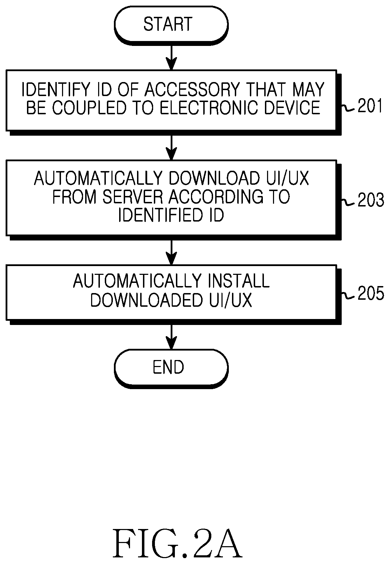

FIG. 2A illustrates a flowchart of a procedure of automatically installing software program when coupling an accessory in an electronic device 100 according to an embodiment of the present disclosure.

Referring to FIG. 2A, the electronic device 100 identifies ID of an accessory that may be coupled to the electronic device in step 201. In other words, the electronic device 100 senses that the accessory is coupled to the electronic device 100, and identifies the ID from the coupled accessory. In this case, the electronic device 100 may sense that the accessory is coupled to the electronic device 100 through a recognition pin attached to the accessory. Moreover, the electronic device 100 may check a range of ADC values or tag information from the coupled accessory and identify the ID of a corresponding accessory.

Subsequently, the electronic device 100 proceeds to step 203 to automatically download software program from a server according to the identified ID. In particular, if the identified ID information is not stored in a memory, the electronic device 100 determines that there is no history that the coupled accessory has been coupled to the electronic device 100 and downloads software program corresponding to the identified ID information from a server.

Subsequently, the electronic device 100 proceeds to step 205 to automatically install the downloaded software program. In this case, the electronic device 100 provides options to be able to determine whether to automatically install the downloaded software program.

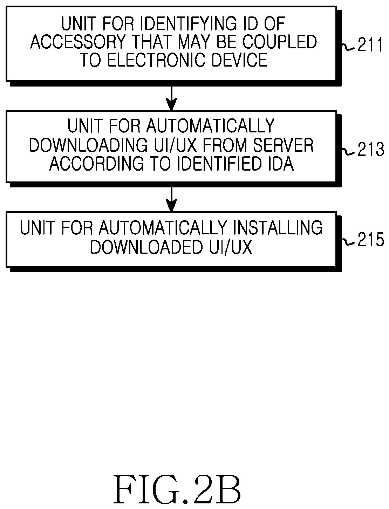

FIG. 2B illustrates a diagram of units capable of automatically installing software program when coupling an accessory in an electronic device according to an embodiment of the present disclosure.

Referring to FIG. 2B, the electronic device 100 includes a unit 211 for identifying the ID of an accessory that may be coupled to the electronic device 100. In particular, the electronic device 100 may include a unit for sensing that a recognition pin of an accessory is coupled and a unit for sensing that an ADC is coupled. In this case, the unit for sensing the recognition pin coupling of the accessory and the unit for sensing the ADC coupling may be provided for each of all types of accessories.

In addition, the electronic device 100 includes a unit 213 for automatically downloading software program from a server according to the identified ID. Moreover, the electronic device 100 includes a communication system that may perform a communication connection.

Moreover, the electronic device 100 includes a unit 215 for automatically installing downloaded software program. In this case, the electronic device 100 may include a unit for mapping and storing identified ID information and downloaded software program.

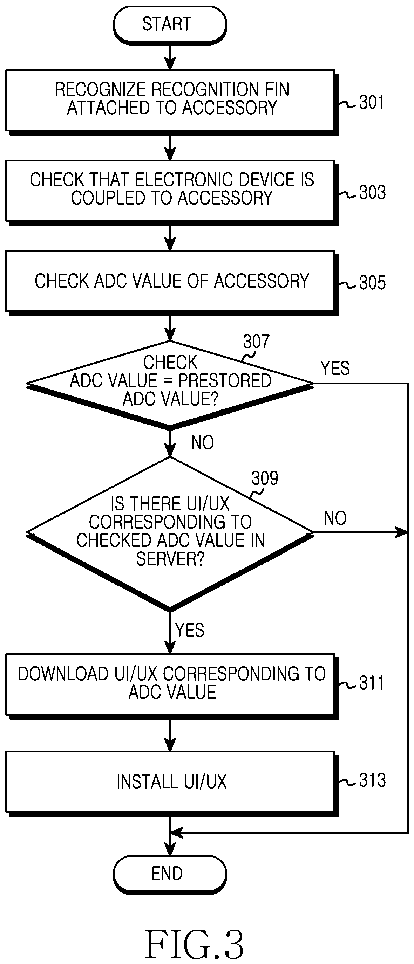

FIG. 3 illustrates a flowchart of a procedure of downloading and installing software program according to an ADC value of an accessory in an electronic device 100 according to an embodiment of the present disclosure.

Referring to FIG. 3, the electronic device 100 recognizes a recognition pin attached to an accessory in step 301 and then proceeds to step 303 to check that an accessory is coupled. In this case, the accessory includes a protective case, an ear cap, an electronic pen, a speaker, an ear phone, and an adapter that may be coupled to the electronic device 100.

Subsequently, the electronic device 100 checks an ADC value of the accessory in step 305. In other words, the electronic device 100 recognizes a level of a voltage that flows in a resistor of an ADC attached to the accessory, and checks a range of ADC values.

Subsequently, the electronic device 100 proceeds to step 307 to check whether the checked ADC value is the same as a pre-stored ADC value. In other words, the electronic device 100 checks whether the ADC value of the accessory coupled to the electronic device 100 is pre-stored in the electronic device 100.

If the checked ADC value is the same to the pre-stored ADC value, the electronic device 100 determines that there is a history that the currently coupled accessory has been coupled to the electronic device 100, and ends the procedure according to an embodiment of the present disclosure.

On the other hand, if the checked ADC value is not the same to the pre-stored ADC value, the electronic device 100 accesses a server preset in step 309 and checks whether there is software program corresponding to the checked ADC value in the server.

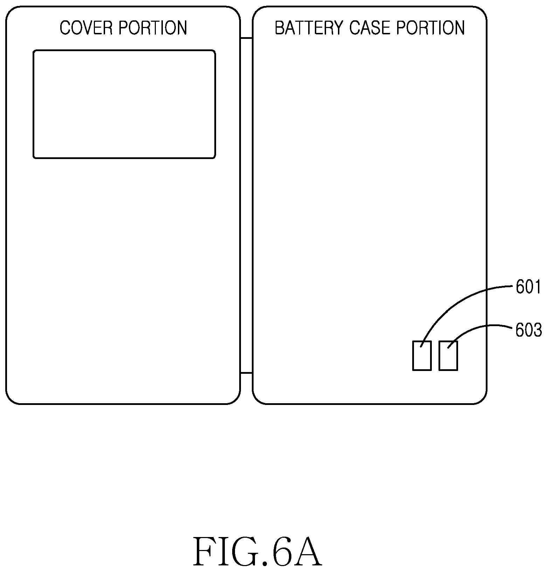

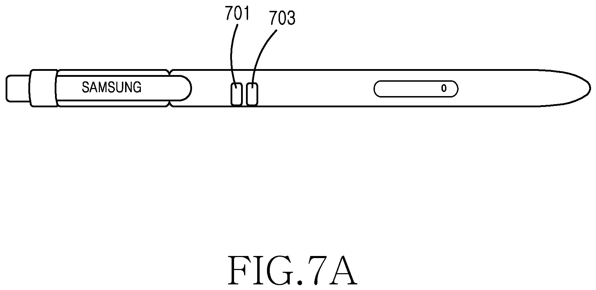

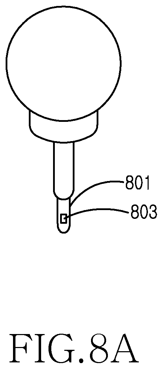

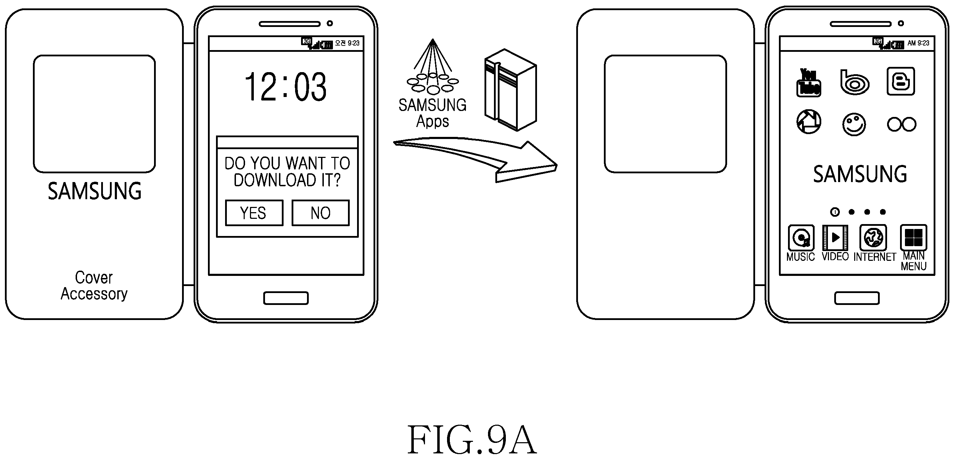

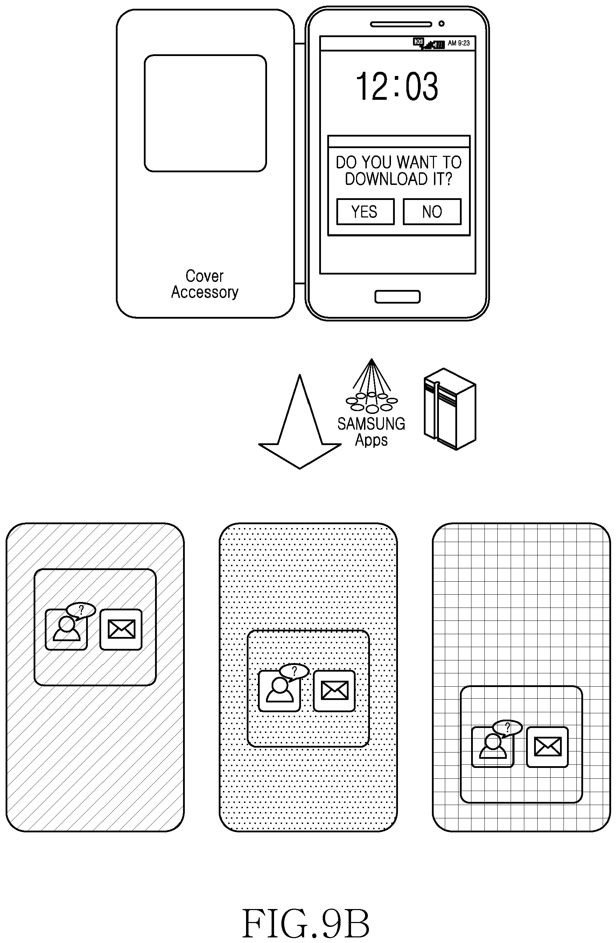

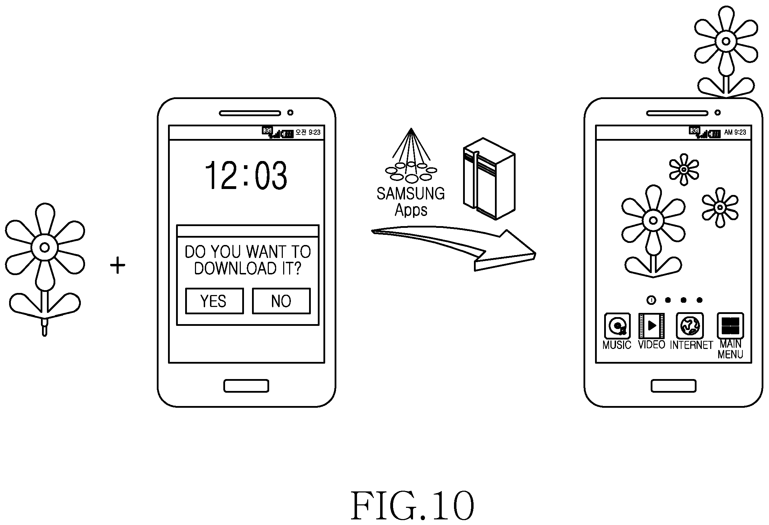

If there is software program corresponding to the checked ADC value in the server, the electronic device 100 downloads software program corresponding to a corresponding ADC value from the server in step 311 and then proceeds to step 313 to install the software program. Subsequently, the electronic device 100 ends the procedure according to an embodiment of the present disclosure. For example, the electronic device 100 may check that the electronic device 100 is covered with a protective case, by recognizing that a recognition pin 601 attached to the protective case is coupled to the device recognition port 152 of the electronic device 100, as shown in FIG. 6A. Subsequently, the electronic device 100 measures a level of a voltage flowing in a resistor of an ADC 603 of the protective case to check a range of ADC values and if a corresponding ADC value is not pre-stored in the electronic device 100, the electronic device 100 may download and then automatically install software program corresponding to the corresponding ADC value from a server. As another example, the electronic device 100 may check that the electronic device 100 is coupled to an electronic pen, by recognizing that a recognition pin 701 attached to the electronic pen is coupled to the device recognition port 152 of the electronic device 100, as shown in FIG. 7A. Subsequently, the electronic device 100 measures a level of a voltage flowing in a resistor of an ADC 703 of the electronic pen to check a range of ADC values and if a corresponding ADC value is not pre-stored in the electronic device 100, the electronic device 100 may download and then automatically install software program corresponding to the corresponding ADC value from the server, for example, as illustrated in FIG. 9. As another example, the electronic device 100 may check that the electronic device 100 is coupled to an ear cap, by recognizing that a recognition pin 801 attached to the ear cap is coupled to the device recognition port 152 of the electronic device 100, as shown in FIG. 8A. Subsequently, the electronic device 100 measures a level of a voltage flowing in a resistor of an ADC 803 of the ear cap to check a range of ADC values and if a corresponding ADC value is not pre-stored in the electronic device 100, the electronic device 100 may download and then automatically install software program corresponding to the corresponding ADC value from the server, for example, as illustrated in FIG. 10.

On the other hand, if there is no software program corresponding to the checked ADC value in the server, the electronic device 100 ends the procedure according to an embodiment of the present disclosure.

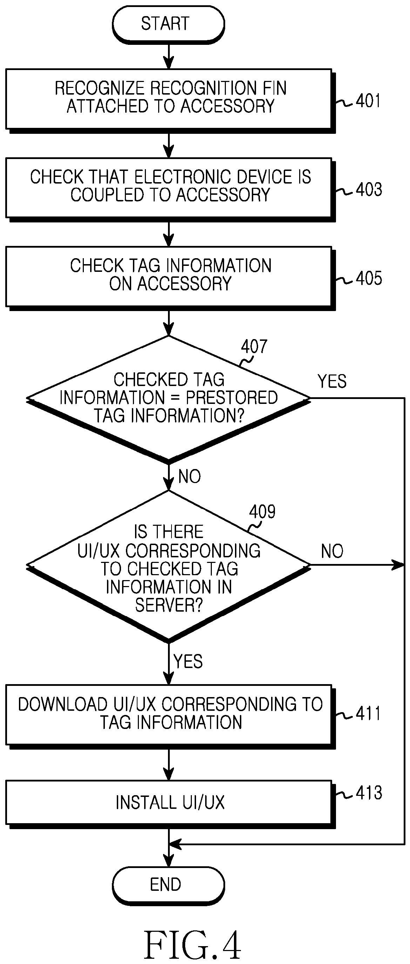

FIG. 4 illustrates a flowchart of a procedure of downloading and installing software program according to tag information on an accessory in an electronic device 100 according to another embodiment of the present disclosure

Referring to FIG. 4, the electronic device 100 recognizes a recognition pin attached to an accessory in step 401 and then proceeds to step 403 to check that the electronic device 100 is coupled to the accessory. In this case, the accessory includes a protective case, an ear cap, and an electronic pen that may be coupled to the electronic device 100.

Subsequently, the electronic device 100 checks tag information on the accessory in step 405. In other words, the electronic device 100 may obtain ID information on a corresponding accessory from a tag attached to the accessory through the communication system 140. For example, the electronic device 100 may obtain ID information on a corresponding protective case from an NFC tag of a protective case. As another example, the electronic device 100 may check ID information on a corresponding electronic pen from a Bluetooth tag of an electronic pen.

Subsequently, the electronic device 100 proceeds to step 407 to check whether the checked tag information is the same as pre-stored tag information.

If the checked tag information is the same as pre-stored tag information, the electronic device 100 determines that there is a history that the currently coupled accessory has been coupled to the electronic device 100, and ends the procedure according to an embodiment of the present disclosure.

On the other hand, if the checked tag information is not the same as pre-stored tag information, the electronic device 100 proceeds to step 409 to check whether there is software program corresponding to the checked tag information in a server.

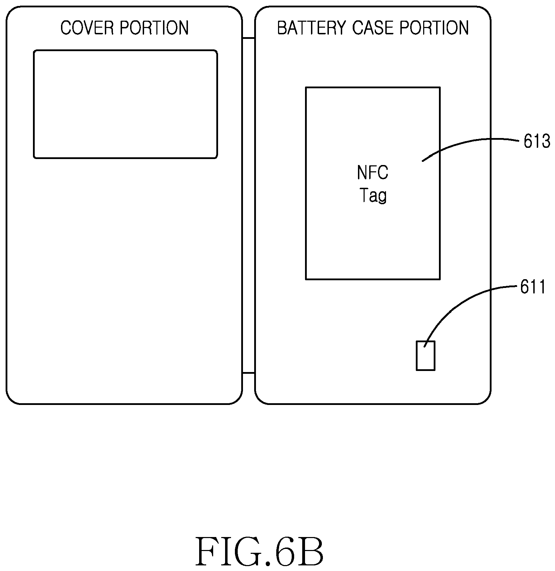

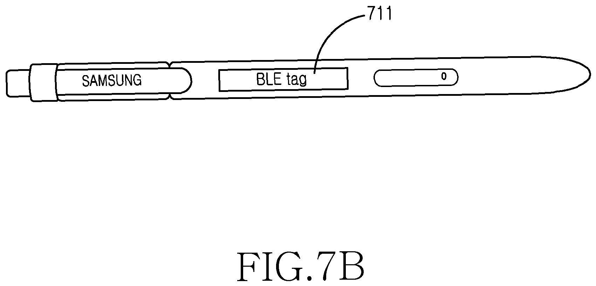

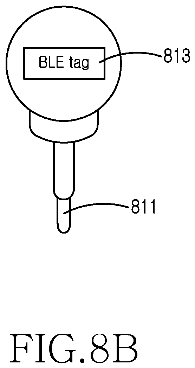

If there is software program corresponding to the checked tag information in a server, the electronic device 100 downloads the software program corresponding to tag information from the server in step 411 and then proceeds to step 413 to install the downloaded software program. Subsequently, the electronic device 100 ends the procedure according to an embodiment of the present disclosure. For example, the electronic device 100 may recognize a recognition pin 611 attached to a protective case to check that the electronic device is covered with the protective case, as shown in FIG. 6B. Subsequently, the electronic device 100 may obtain tag information from an NFC tag 613 of the protective case and if corresponding tag information is not pre-stored in the electronic device 100, the electronic device 100 may download and then automatically install software program corresponding to the corresponding tag information from a server. As another example, the electronic device 100 may recognize a recognition pin 711 attached to an electronic pen to check that the electronic device is coupled to the electronic pen, as shown in FIG. 7B. Subsequently, the electronic device 100 may obtain tag information from a Bluetooth tag 713 of the electronic pen and if corresponding tag information is not pre-stored in the electronic device 100, the electronic device 100 may download and then automatically install software program corresponding to the corresponding tag information from the server, for example, as illustrated in FIG. 9. As another example, the electronic device 100 may recognize a recognition pin 811 attached to an ear cap to check that the electronic device is coupled to the ear cap, as shown in FIG. 8B. Subsequently, the electronic device 100 may obtain tag information from a Bluetooth tag 813 of the ear cap and if corresponding tag information is not pre-stored in the electronic device 100, the electronic device 100 may download and then automatically install software program corresponding to the corresponding tag information from the server, for example, as illustrated in FIG. 10.

On the other hand, if there is software program corresponding to the checked tag information in the server, the electronic device 100 ends the procedure according to an embodiment of the present disclosure.

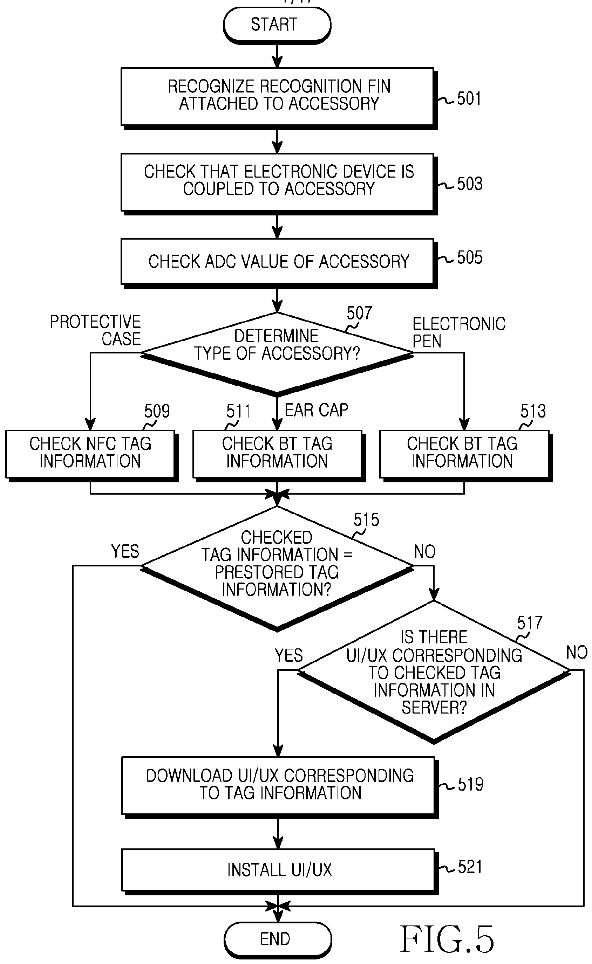

FIG. 5 illustrates a flowchart of a procedure of downloading and installing software program according to an ADC value and tag information on an accessory in an electronic device 100 according to another embodiment of the present disclosure.

Referring to FIG. 5, the electronic device 100 recognizes a recognition pin attached to an accessory in step 501 and then proceeds to step 503 to check that the electronic device 100 is coupled to the accessory. In this case, the accessory includes a protective case, an ear cap, and an electronic pen that may be coupled to the electronic device 100.

Subsequently, the electronic device 100 checks an ADC value of the accessory in step 505. For example, the electronic device 100 may sense a level of a voltage flowing in a resistor of an ADC attached to the accessory to check a range of ADC values.

Subsequently, the electronic device 100 determines the type of the accessory on the basis of the checked ranged of ADC values. In this case, it is assumed that the electronic device 100 presets and pre-stores a range of ADC values for each of all types of accessories. Moreover, embodiments of the present disclosure assume that a communication technique is preset depending on an accessory. For example, it may be preset so that a protective case communicates through an NFC technique, and an ear cap and an electronic pen communicate through a Bluetooth technique.

If it is determined as a result of checking a range of ADC values that a coupled accessory is a protective case, the electronic device 100 proceeds to step 509 to check NFC tag information. For example, if the checked range of ADC values is 10 to 20 and thus represents a protective case, the electronic device 100 may drive an NFC communication module to obtain tag information from an NFC tag of the protective case. In this case, tag information may include the ID of the protective case.

If it is determined as a result of checking the range of ADC values that the coupled accessory is an ear cap, the electronic device proceeds to step 511 to check Bluetooth tag information. For example, if the checked range of ADC values is 30 to 40 and thus represents an ear cap, the electronic device 100 may drive a Bluetooth communication module to obtain tag information from a Bluetooth tag of the ear cap. In this case, tag information may include the ID of the ear cap.

If it is determined as a result of checking the range of ADC values that the coupled accessory is an electronic pen, the electronic device proceeds to step 513 to check Bluetooth tag information. For example, if the checked range of ADC values is 50 to 60 and thus represents an electronic pen, the electronic device 100 may drive a Bluetooth communication module to check tag information from a Bluetooth tag of the electronic pen. In this case, tag information may include the ID of the electronic pen.

Subsequently, the electronic device 100 proceeds to step 515 to check whether the checked tag information is the same as pre-stored tag information.

If the checked tag information is the same as pre-stored tag information, the electronic device 100 determines that there is a history that the currently coupled accessory has been coupled to the electronic device 100, and ends the procedure according to an embodiment of the present disclosure.

On the other hand, if the checked tag information is not the same as pre-stored tag information, the electronic device 100 accesses a server in step 517 and checks whether there is software program corresponding to the checked tag information in a server.

If there is software program corresponding to the checked tag information in a server, the electronic device 100 downloads the software program corresponding to tag information in step 519 and then proceeds to step 512 to install the software program. Here, the downloaded and installed software program may be software program that is designed so that the colors, logo, and patterns of the software program coordinate with those of the accessory coupled to the electronic device 100. For example, in a case where the electronic device 100 is covered with a Samsung Electronics protective case, the electronic device 100 may download and automatically install themes designed for the Samsung Electronics protective case from a server, as shown in FIG. 9A. As another example, in a case where the electronic device 100 is covered with protective cases which are different from each other in color and in pattern, the electronic device 100 may download and automatically install themes coordinating with the colors and patterns of each protective case, as shown in FIG. 9B. In this case, the downloaded and automatically installed themes are themes designed in consideration of the position of windows that are arranged on the protective cases and the electronic device 100 may display a simple software program through the windows that are arranged at the different positions of the protective cases. As another example, in a case where the electronic device 100 is coupled to a flower-shaped ear cap, the electronic device 100 may download and automatically install themes including flowers from a server. Subsequently, the electronic device 100 ends the procedure according to an embodiment of the present disclosure.

On the other hand, if there is software program corresponding to the checked tag information in the server, the electronic device 100 ends the procedure according to an embodiment of the present disclosure.

Although a theme is mainly described as an example of a downloaded, installed software program in the foregoing description for convenience, the present disclosure is not limited thereto but may include all software program that may be implemented in the electronic device 100. For example, in a case where an electronic pen capable of recognizing fingerprint is coupled to the electronic device 100, the electronic device 100 may download from a server an software program that requires a user identification procedure, and automatically install it. In this case, if there is a need for the control of an application that is installed in the electronic device 100, the user of the electronic device 100 may control the application after successfully performing user identification through the electronic pen.

The embodiments and all functional operations of the present disclosure described in the specification may be practiced in computer software, firmware, or hardware that includes the structures disclosed in the specification and equivalent structures thereof, or in combinations of one or more thereof. Moreover, the embodiments of the present disclosure described in the specification may be practiced as one or more computer program products, namely, one or more modules of computer program instructions that are encoded on a computer readable medium to be executed by a data processing device or to control the operation of the device.

The computer readable medium may be a machine readable storage medium, a machine readable storage substrate, a memory device, a configuration of a material affecting a machine readable radio-wave stream or combinations of one or more thereof. The data processing device includes a programmable processor, a computer, a multi processor, or all equipment, devices, and machines for processing data that include a computer. The equipment may include codes that are added to hardware and generate an execution environment for a computer program, for example, codes that configure firmware, a protocol stack, a database management system, an operating system or combinations of one or more thereof.

## Claims

1. A method of operating an electronic device, the method comprising:
identifying, by an electronic device, an identification (ID) of an accessory that is coupled to the electronic device, wherein the accessory is an electronic pen capable of performing a fingerprint recognition function for user authentication;
receiving, by the electronic device, at least one user interface program associated with the fingerprint recognition function, based on the identified ID of the accessory;
installing, by the electronic device, the received at least one user interface program to display a user interface associated with the fingerprint recognition function;
until user authentication using the user fingerprint recognized through the accessory is performed, restricting execution of at least one application among a plurality of applications installed in the electronic device; and
displaying the user interface, wherein the displayed user interface comprises an indication that the user authentication using the user fingerprint recognized through the accessory is required to execute the at least one application.

2. The method of claim 1, wherein identifying the ID of the accessory that is coupled to the electronic device comprises recognizing whether a recognition port of the electronic device is coupled to a recognition pin attached to the accessory.

3. The method of claim 1, wherein identifying the ID of the accessory that is coupled to the electronic device comprises:
flowing, by the electronic device, an electric current to the accessory through a connection mechanism,
detecting, by the electronic device, a returning electric current or voltage from the accessory; and
determining the ID of the accessory, based at least partly on the detected returning electric current or voltage.

4. The method of claim 1, wherein receiving the at least one user interface program based on the identified ID of the accessory comprises:
determining whether the ID of the accessory is pre-stored in the electronic device;
checking whether the at least one user interface program corresponding to the ID of the accessory is present at a server, if the ID of the accessory is not pre-stored in the electronic device; and
downloading the at least one user interface program from the server, if the at least one user interface program corresponding to the ID of the accessory is present at the server.

5. The method of claim 1, wherein identifying the ID of the accessory that is coupled to the electronic device comprises obtaining the ID from a tag included to the accessory.

6. The method of claim 5, wherein the tag comprises at least one of a QR code, bar code, Near Field Communication (NFC) tag, a Bluetooth tag, or Radio Frequency Identification(RFID) .

7. The method of claim 1, wherein receiving the at least one user interface program based on the ID of the accessory comprises:
determining whether the identified ID is pre-stored in the electronic device;
checking whether the at least one user interface program corresponding to tag information is present at a server, if the identified ID is not pre-stored in the electronic device; and
receiving the at least one user interface program from the server, if the at least one user interface program corresponding to tag information is present at the server.

8. The method of claim 1, wherein identifying the ID of the accessory that is coupled to the electronic device comprises:
measuring a level of a voltage that flows in a resistor included to the accessory;
checking a type of the accessory based on an ADC value according to the measured voltage level;
driving a communication module preset according to the type of the accessory; and
obtaining the ID from the accessory through the driven communication module.

9. An electronic device (100) comprising:
one or more processors (120);
a touch sensitive display (130);
a communication system (140);
an external device interface (150); and
a memory (110) configured to store one or more programs, wherein the one or more processors are configured to execute instructions of the one or more programs to:
identify an identification(ID) of an accessory that is coupled to the electronic device, wherein the accessory is an electronic pen capable of performing a fingerprint recognition function for user authentication;
receive at least one user interface program associated with the fingerprint recognition function, based on the identified ID of the accessory;
install the received at least one user interface program to display a user interface associated with the fingerprint recognition function;
until user authentication using the user fingerprint recognized through the accessory is performed, restrict execution of at least one application among a plurality of applications installed in the electronic device; and
display the user interface, wherein the displayed user interface comprises an indication that the user authentication using the user fingerprint recognized through the accessory is required to execute the at least one application.

10. The electronic device of claim 9, wherein the one or more processors are configured to execute instructions of the one or more programs to recognize whether a recognition port of the electronic device is coupled to a recognition pin attached to the accessory.

11. The electronic device of claim 9, wherein the one or more processors are configured to execute instructions of the one or more programs to flow an electric current to the accessory through a connection mechanism, to detect a returning electric current or voltage from the accessory, and to determine the ID of the accessory, based at least partly on the detected returning electric current or voltage.

12. The electronic device of claim 9, wherein the one or more processors are configured to execute instructions of the one or more programs to determine whether the ID of the accessory is pre-stored in the electronic device; to check whether the at least one user interface program corresponding to the ID of the accessory is present at a server, if the ID of the accessory is not pre-stored in the electronic device; and to download the at least one user interface program from the server, if the at least one user interface program corresponding to the ID of the accessory is present at the server.

13. The apparatus of claim 9, wherein the apparatus arranged to implement a method of one of claims 5 to 8.

## Patentansprüche

1. Verfahren zum Betreiben eines elektronischen Geräts, wobei das Verfahren Folgendes umfasst:
Identifizieren einer Identifikation (ID) eines Zubehörs, das mit dem elektronischen Gerät gekoppelt ist, durch ein elektronisches Gerät, wobei das Zubehör ein elektronischer Stift ist, der eine Fingerabdruckerkennungsfunktion zur Benutzerauthentifizierung ausführen kann;
Empfangen von mindestens einem der Fingerabdruckerkennungsfunktion zugeordneten Benutzeroberflächenprogramm basierend auf der identifizierten ID des Zubehörs durch das elektronische Gerät;
Installieren des empfangenen mindestens einen Benutzeroberflächenprogramms durch das elektronische Gerät, um eine Benutzeroberfläche anzuzeigen, die der Fingerabdruckerkennungsfunktion zugeordnet ist;
Beschränken der Ausführung von mindestens einer Anwendung unter einer Vielzahl von auf dem elektronischen Gerät installierten Anwendungen, bis eine Benutzerauthentifizierung unter Verwendung des durch das Zubehör erkannten Benutzerfingerabdrucks durchgeführt wird; und
Anzeigen der Benutzeroberfläche, wobei die angezeigte Benutzeroberfläche eine Angabe umfasst, dass die Benutzerauthentifizierung unter Verwendung des durch das Zubehör erkannten Benutzerfingerabdrucks erforderlich ist, um die mindestens eine Anwendung auszuführen.

2. Verfahren nach Anspruch 1, wobei das Identifizieren der ID des Zubehörs, das mit dem elektronischen Gerät gekoppelt ist, das Erkennen umfasst, ob ein Erkennungsport des elektronischen Geräts mit einem Erkennungsstift gekoppelt ist, der an dem Zubehör angebracht ist.

3. Verfahren nach Anspruch 1, wobei das Identifizieren der ID des Zubehörs, das mit dem elektronischen Gerät gekoppelt ist, Folgendes umfasst:
Leiten eines elektrischen Stroms durch das elektronische Gerät über einen Verbindungsmechanismus zum Zubehör,
Erfassen eines zurückkehrenden elektrischen Stroms oder einer Spannung von dem Zubehör durch das elektronische Gerät; und
Bestimmen der ID des Zubehörs, zumindest teilweise basierend auf dem erfassten zurückkehrenden elektrischen Strom oder der Spannung.

4. Verfahren nach Anspruch 1, wobei das Empfangen des mindestens einen Benutzeroberflächenprogramms basierend auf der identifizierten ID des Zubehörs Folgendes umfasst:
Bestimmen, ob die ID des Zubehörs in dem elektronischen Gerät vorgespeichert ist;
Prüfen, ob das mindestens eine Benutzeroberflächenprogramm, das der ID des Zubehörs entspricht, auf einem Server vorhanden ist, wenn die ID des Zubehörs nicht in dem elektronischen Gerät vorgespeichert ist; und
Herunterladen des mindestens einen Benutzeroberflächenprogramms von dem Server, wenn das mindestens eine Benutzeroberflächenprogramm, das der ID des Zubehörs entspricht, auf dem Server vorhanden ist.

5. Verfahren nach Anspruch 1, wobei das Identifizieren der ID des Zubehörs, das mit dem elektronischen Gerät gekoppelt ist, das Erhalten der ID von einem Etikett, das in dem Zubehör eingeschlossen ist, umfasst.

6. Verfahren nach Anspruch 5, wobei das Etikett einen QR-Code, einen Strichcode, ein NFC(Near Field Communication)-Etikett, ein Bluetooth-Etikett oder eine Funkfrequenzkennzeichnung (RFID) umfasst.

7. Verfahren nach Anspruch 1, wobei das Empfangen des mindestens einen Benutzeroberflächenprogramms basierend auf der ID des Zubehörs Folgendes umfasst:
Bestimmen, ob die identifizierte ID in dem elektronischen Gerät vorgespeichert ist;
Überprüfen, ob das mindestens eine Benutzeroberflächenprogramm, das Etiketteninformationen entspricht, auf einem Server vorhanden ist, wenn die identifizierte ID nicht in dem elektronischen Gerät vorgespeichert ist; und
Empfangen des mindestens einen Benutzeroberflächenprogramms von dem Server, wenn das mindestens eine Benutzeroberflächenprogramm, das Etiketteninformationen entspricht, auf dem Server vorhanden ist.

8. Verfahren nach Anspruch 1, wobei das Identifizieren der ID des Zubehörs, das mit dem elektronischen Gerät gekoppelt ist, Folgendes umfasst:
Messen eines Spannungspegels, der in einem Widerstand fließt, der in dem Zubehör eingeschlossen ist;
Prüfen eines Zubehörtyps basierend auf einem ADC-Wert gemäß dem gemessenen Spannungspegel;
Antreiben eines Kommunikationsmoduls, das gemäß dem Zubehörtyps voreingestellt ist; und
Abrufen der ID von dem Zubehör über das angetriebene Kommunikationsmodul.

9. Elektronisches Gerät (100), umfassend:
einen oder mehrere Prozessoren (120);
eine berührungsempfindliche Anzeige (130);
ein Kommunikationssystem (140);
eine externe Geräteschnittstelle (150); und
einen Speicher (110), der konfiguriert ist, um ein oder mehrere Programme zu speichern, wobei der eine oder die mehreren Prozessoren konfiguriert sind, um Anweisungen des einen oder der mehreren Programme für Folgendes auszuführen:
Identifizieren einer Identifikation (ID) eines Zubehörs, das mit dem elektronischen Gerät gekoppelt ist, wobei das Zubehör ein elektronischer Stift ist, der eine Fingerabdruckerkennungsfunktion zur Benutzerauthentifizierung ausführen kann;
Empfangen von mindestens einem Benutzeroberflächenprogramm, das der Fingerabdruckerkennungsfunktion zugeordnet ist, basierend auf der identifizierten ID des Zubehörs;
Installieren des empfangenen mindestens einen Benutzeroberflächenprogramms, um eine Benutzeroberfläche anzuzeigen, die der Fingerabdruckerkennungsfunktion zugeordnet ist;
Beschränken der Ausführung von mindestens einer Anwendung unter einer Vielzahl von auf dem elektronischen Gerät installierten Anwendungen, bis eine Benutzerauthentifizierung unter Verwendung des durch das Zubehör erkannten Benutzerfingerabdrucks durchgeführt wird; und
Anzeigen der Benutzeroberfläche, wobei die angezeigte Benutzeroberfläche eine Angabe umfasst, dass die Benutzerauthentifizierung unter Verwendung des durch das Zubehör erkannten Benutzerfingerabdrucks erforderlich ist, um die mindestens eine Anwendung auszuführen.

10. Elektronisches Gerät nach Anspruch 9, wobei der eine oder die mehreren Prozessoren so konfiguriert sind, dass sie Anweisungen des einen oder der mehreren Programme ausführen, um zu erkennen, ob ein Erkennungsport des elektronischen Geräts mit einem Erkennungsstift gekoppelt ist, der an dem Zubehör angebracht ist.

11. Elektronisches Gerät nach Anspruch 9, wobei der eine oder die mehreren Prozessoren so konfiguriert sind, dass sie Anweisungen des einen oder der mehreren Programme ausführen, um einen elektrischen Strom über einen Verbindungsmechanismus zum Zubehör zu leiten, um einen zurückkommenden elektrischen Strom oder eine Spannung von dem Zubehör zu erfassen und die ID des Zubehörs zu bestimmen, zumindest teilweise basierend auf dem erfassten zurückkehrenden elektrischen Strom oder der Spannung.

12. Elektronisches Gerät nach Anspruch 9, wobei der eine oder die mehreren Prozessoren konfiguriert sind, um Anweisungen des einen oder der mehreren Programme auszuführen, um zu bestimmen, ob die ID des Zubehörs in dem elektronischen Gerät vorgespeichert ist; zu überprüfen, ob das mindestens eine Benutzeroberflächenprogramm, das der ID des Zubehörs entspricht, auf einem Server vorhanden ist, wenn die ID des Zubehörs nicht in dem elektronischen Gerät vorgespeichert ist; und das mindestens eine Benutzeroberflächenprogramm vom Server herunterzuladen, wenn das mindestens eine Benutzeroberflächenprogramm, das der ID des Zubehörs entspricht, auf dem Server vorhanden ist.

13. Vorrichtung nach Anspruch 9, wobei die Vorrichtung eingerichtet ist, um ein Verfahren nach einem der Ansprüche 5 bis 8 auszuführen.

## Revendications

1. Procédé de fonctionnement d'un dispositif électronique, le procédé comprenant :
identifier, par un dispositif électronique, une identification (ID) d'un accessoire qui est couplé au dispositif électronique, où l'accessoire est un stylo électronique capable d'effectuer une fonction de reconnaissance d'empreinte digitale pour l'authentification de l'utilisateur ;
recevoir, par le dispositif électronique, au moins un programme d'interface d'utilisateur associé à la fonction de reconnaissance d'empreinte digitale, en fonction de l'ID identifiée de l'accessoire ;
installer, par le dispositif électronique, l'au moins un programme d'interface d'utilisateur reçu pour afficher une interface d'utilisateur associée à la fonction de reconnaissance d'empreinte digitale ;
jusqu'à ce que l'authentification de l'utilisateur en utilisant l'empreinte digitale de l'utilisateur reconnue à travers l'accessoire soit accomplie, limiter l'exécution d'au moins une application parmi une pluralité d'applications installées dans le dispositif électronique ; et
afficher l'interface d'utilisateur, où l'interface d'utilisateur affichée comprend une indication du fait que l'authentification de l'utilisateur en utilisant l'empreinte digitale de l'utilisateur reconnue à travers l'accessoire est nécessaire pour exécuter l'au moins une application.

2. Procédé selon la revendication 1, où l'identification de l'ID de l'accessoire qui est couplé au dispositif électronique comprend reconnaître si un port de reconnaissance du dispositif électronique est couplé à une broche de reconnaissance attachée à l'accessoire.

3. Procédé selon la revendication 1, où l'identification de l'ID de l'accessoire qui est couplé au dispositif électronique comprend :
faire circuler, par le dispositif électronique, un courant électrique dans l'accessoire à travers un mécanisme de connexion,
détecter, par le dispositif électronique, un courant ou tension électrique de retour provenant de l'accessoire ; et
déterminer l'ID de l'accessoire, sur la base au moins partiellement du courant ou tension électrique détecté/ée.

4. Procédé selon la revendication 1, où la réception de l'au moins un programme d'interface d'utilisateur sur la base de l'ID identifiée de l'accessoire comprend :
déterminer si l'ID de l'accessoire est pré-stockée dans le dispositif électronique ;
contrôler si l'au moins un programme d'interface d'utilisateur correspondant à l'ID de l'accessoire est présent sur un serveur, si l'ID de l'accessoire n'est pas pré-stockée dans le dispositif électronique ; et
télécharger l'au moins un programme d'interface d'utilisateur à partir du serveur, si l'au moins un programme d'interface d'utilisateur correspondant à l'ID de l'accessoire est présent sur le serveur.

5. Procédé selon la revendication 1, où l'identification de l'ID de l'accessoire qui est couplé au dispositif électronique comprend l'obtention de l'ID à partir d'une étiquette incluse dans l'accessoire.

6. Procédé selon la revendication 5, où l'étiquette comprend au moins un parmi un code QR, un code à barres, une étiquette de communication en champ proche (NFC), une étiquette Bluetooth ou une identification par radiofréquence (RFID).

7. Procédé selon la revendication 1, où la réception de l'au moins un programme d'interface d'utilisateur sur la base de l'ID de l'accessoire comprend :
déterminer si l'ID identifiée est pré-stockée dans le dispositif électronique ;
contrôler si l'au moins un programme d'interface d'utilisateur correspondant à des informations d'étiquette est présent sur un serveur, si l'ID identifiée n'est pas pré-stockée dans le dispositif électronique ; et
recevoir l'au moins un programme d'interface d'utilisateur à partir du serveur, si l'au moins un programme d'interface d'utilisateur correspondant à des informations d'étiquette est présent sur le serveur.

8. Procédé selon la revendication 1, où l'identification de l'ID de l'accessoire qui est couplé au dispositif électronique comprend :
mesurer un niveau de tension qui circule dans une résistance incluse dans l'accessoire ;
vérifier d'un type de l'accessoire sur la base d'une valeur ADC en fonction du niveau de tension mesuré ;
actionner un module de communication pré-reglé conformément au type de l'accessoire ; et
recevoir l'ID de l'accessoire à travers le module de communication actionné.

9. Dispositif électronique (100) comprenant :
un ou plusieurs processeurs (120) ;
un écran tactile (130) ;
un système de communication (140) ;
une interface de périphérique externe (150) ; et
une mémoire (110) configurée pour stocker un ou plusieurs programmes, où l'un ou plusieurs processeurs sont configurés pour exécuter des instructions du ou des programmes afin de :
identifier une identification (ID) d'un accessoire qui est couplé au dispositif électronique, où l'accessoire est un stylo électronique capable d'exécuter une fonction de reconnaissance d'empreinte digitale pour l'authentification de l'utilisateur ;
recevoir au moins un programme d'interface d'utilisateur associé à la fonction de reconnaissance d'empreinte digitale, sur la base de l'ID identifiée de l'accessoire ;
installer l'au moins un programme d'interface d'utilisateur reçu pour afficher une interface d'utilisateur associée à la fonction de reconnaissance d'empreinte digitale ;
jusqu'à ce que l'authentification de l'utilisateur en utilisant l'empreinte digitale de l'utilisateur reconnue à travers l'accessoire est accomplie, limiter l'exécution d'au moins une application parmi une pluralité d'applications installées dans le dispositif électronique ; et
afficher l'interface d'utilisateur, où l'interface d'utilisateur affichée comprend une indication selon laquelle l'authentification de l'utilisateur en utilisant l'empreinte digitale de l'utilisateur reconnue à travers l'accessoire est nécessaire pour exécuter l'au moins une application.

10. Dispositif électronique selon la revendication 9, où le ou les processeurs sont configurés pour exécuter des instructions du ou des programmes afin de reconnaître si un port de reconnaissance du dispositif électronique est couplé à une broche de reconnaissance attachée à l'accessoire.

11. Dispositif électronique selon la revendication 9, où le ou les processeurs sont configurés pour exécuter des instructions du ou des programmes afin de faire circuler un courant électrique dans l'accessoire à travers un mécanisme de connexion, pour détecter un courant ou tension électrique de retour à partir de l'accessoire, et pour déterminer l'ID de l'accessoire, en fonction au moins partiellement du courant ou tension électrique de retour détecté/ée.

12. Dispositif électronique selon la revendication 9, où le ou les processeurs sont configurés pour exécuter des instructions du ou des programmes pour déterminer si l'ID de l'accessoire est pré-stockée dans le dispositif électronique ; pour contrôler si l'au moins un programme d'interface d'utilisateur correspondant à l'ID de l'accessoire est présent sur un serveur, si l'ID de l'accessoire n'est pas pré-stockée dans le dispositif électronique ; et pour télécharger l'au moins un programme d'interface d'utilisateur à partir du serveur, si l'au moins un programme d'interface d'utilisateur correspondant à l'ID de l'accessoire est présent sur le serveur.

13. Dispositif selon la revendication 9, où le dispositif est configuré pour implémenter un procédé selon l'une des revendications 5 à 8.
